# EUROPÄISCHE PATENTSCHRIFT

(11) **EP 3 194 841 B1**
(45) Veröffentlichungstag und Bekanntmachung des Hinweises auf die Patenterteilung: **30.09.2020**
(21) Anmeldenummer: 15754171.5
(22) Anmeldetag: 19.08.2015
(51) Int. Cl.: F21V 8/00, G02B 6/04

(54) **LICHTLEITERTRÄGERVORRICHTUNG, BELEUCHTUNGSSYSTEM UND VERFAHREN ZUR HERSTELLUNG EINER LICHTLEITERTRÄGERVORRICHTUNG**
LIGHT-GUIDE CARRIER DEVICE, LIGHTING SYSTEM, AND METHOD FOR PRODUCING A LIGHT-GUIDE CARRIER DEVICE
DISPOSITIF SUPPORT DE GUIDE DE LUMIÈRE, SYSTÈME D'ÉCLAIRAGE ET PROCÉDÉ POUR PRODUIRE UN DISPOSITIF SUPPORT DE GUIDE DE LUMIÈRE

(30) Priorität: 18.09.2014 DE 102014218752
(43) Veröffentlichungstag der Anmeldung: 26.07.2017
(73) Patentinhaber: Bayerische Motoren Werke Aktiengesellschaft, 80809 München (DE)
(72) Erfinder: BIECKER, Peter, 82041 Deisenhofen bei München (DE); TOTZAUER, Alexander, 80935 München (DE)
(86) Internationale Anmeldenummer: PCT/EP2015/069034
(87) Internationale Veröffentlichungsnummer: WO 2016/041721

(56) Entgegenhaltungen:
- DE-A1- 2 732 805
- DE-U1-202008 006 191
- GB-A- 2 364 265
- US-A- 3 562 746
- US-A1- 2002 064 347
- US-B1- 8 282 256

## Beschreibung

Es wird eine Lichtleiterträgervorrichtung angegeben. Eine derartige Lichtleiterträgervorrichtung kann eine Vielzahl an optischen Einzelfasern umfassen. Weiterhin werden ein Beleuchtungssystem, welches die Lichtleiterträgervorrichtung umfasst, sowie ein Verfahren zur Herstellung einer Lichtleiterträgervorrichtung angegeben.

Bei bekannten ambienten Beleuchtungssystemen mit Glasfasern werden üblicherweise die zur ambienten Beleuchtung verwendeten Glasfasern einzeln über ein Verbindungselement mit einer Lichtquelle verbunden. Insbesondere bei einer hohen Anzahl an Glasfasern entsteht bei der Herstellung der Beleuchtungssysteme daher ein hoher Montageaufwand. Weiterhin besteht ein hohes Risiko von Falschmontagen, beispielsweise wenn eine oder mehrere Glasfasern nicht komplett in das Verbindungselement eingesteckt sind.

DE 20 2008 006 191 U1 offenbart eine Lichtleiterträgervorrichtung, umfassend einen Träger sowie ein erstes und ein zweites Lichtleitfaserbündel, wobei das erste und das zweite Lichtleitfaserbündel voneinander beabstandet in dem Träger gehalten sind. GB 2 364 265 A offenbart ein Verfahren zur Herstellung eines Kunststoffträgers, in den eine Vielzahl von Lichtleitfasern eingebettet ist.

Es ist eine zu lösende Aufgabe zumindest einiger Ausführungsformen, eine Lichtleiterträgervorrichtung anzugeben, welche mit einem geringen Montageaufwand an einer oder mehreren Lichtquellen befestigt werden kann. Weitere Aufgaben zumindest einiger Ausführungsformen sind es, ein Beleuchtungssystem sowie ein Verfahren zur Herstellung einer Lichtleiterträgervorrichtung anzugeben.

Diese Aufgaben werden durch Gegenstände gemäß den unabhängigen Patentansprüchen gelöst. Vorteilhafte Ausführungsformen und Weiterbildungen der Gegenstände gehen weiterhin aus den abhängigen Patentansprüchen, der nachfolgenden Beschreibung und aus den Zeichnungen hervor.

Eine Lichtleiterträgervorrichtung gemäß der Erfindung umfasst einen Spritzgussträger. Der Spritzgussträger kann insbesondere einen transparenten oder nicht transparenten Kunststoff aufweisen oder aus einem transparenten oder nicht transparenten Kunststoff bestehen. Weiterhin umfasst die Lichtleiterträgervorrichtung ein erstes Lichtleitfaserbündel und ein zweites Lichtleitfaserbündel. Das erste und das zweite Lichtleitfaserbündel weisen jeweils eine Vielzahl an Einzelfasern auf. Die Einzelfasern sind vorzugsweise optische Fasern, wie z.B. Lichtwellenleiter aus Kunststoff, Polymerfasern oder Glasfasern. Beispielsweise umfassen die Lichtleitfaserbündel jeweils zumindest fünf Einzelfasern, bevorzugt zumindest 50 Einzelfasern. Die Einzelfasern können entweder jeweils nebeneinander oder auch in mehreren Ebenen übereinander angeordnet sein.

Das erste und das zweite Lichtleitfaserbündel sind voneinander beabstandet im Spritzgussträger eingebettet. Dies kann insbesondere bedeuten, dass die Lichtleitfaserbündel einen Abstand zueinander aufweisen, der deutlich größer ist als der Abstand zwischen Einzelfasern innerhalb eines Lichtleitfaserbündels. Vorzugsweise ist der Abstand vom ersten zum zweiten Lichtleitfaserbündel größer als eine Breite der Lichtleitfaserbündel.

Gemäß der Erfindung sind das erste und das zweite Lichtleitfaserbündel mittels Spritzgießen im Spritzgussträger eingegossen. Vorzugsweise sind das erste und das zweite Lichtleitfaserbündel gemeinsam umspritzt. Insbesondere können das erste und das zweite Lichtleitfaserbündel in einem gemeinsamen Spritzgussvorgang mit einem Kunststoffmaterial umspritzt sein, wobei das Kunststoffmaterial nach dem Spritzgussvorgang den Spritzgussträger bildet. Gemäß einer weiteren Ausführungsform weisen das erste und das zweite Lichtleitfaserbündel jeweils einen ersten Bereich auf, in dem die Lichtleitfaserbündel in einer lateralen Richtung vollständig vom Spritzgussträger umschlossen sind. Mit "lateraler Richtung" ist hierbei insbesondere eine Richtung senkrecht zur Hauptausdehnungsrichtung der einzelnen Fasern, d.h. senkrecht zur Längsrichtung der Einzelfasern gemeint. Vorzugsweise weisen das erste und das zweite Lichtleitfaserbündel einen zweiten Bereich auf, welcher sich außerhalb des Spritzgussträgers befindet. Die Lichtleitfaserbündel können also insbesondere jeweils einen ersten Bereich aufweisen, in dem die einzelnen Fasern der Lichtleitfaserbündel im Spritzgussträger eingebettet sind, und einen zweiten Bereich, in dem die einzelnen Fasern der Lichtleitfaserbündel aus dem Spritzgussträger herausragen. Der zweite Bereich kann sich insbesondere direkt an den ersten Bereich anschließen. Vorzugsweise befindet sich der jeweilige zweite Bereich der Lichtleitfaserbündel auf derselben Seite des Spritzgussträgers. Auf der den zweiten Bereichen gegenüberliegenden Seite des Spritzgussträgers schließen die Lichtleitfaserbündel vorzugsweise bündig mit dem Spritzgussträger ab, d.h. die Einzelfasern der Lichtleitfaserbündel ragen bevorzugt nur auf einer Seite des Spritzgussträgers aus diesem heraus.

Gemäß einer weiteren Ausführungsform weisen das erste und das zweite Lichtleitfaserbündel jeweils eine Breite zwischen 0,5 und 1,5 mm auf. Unter "Breite" der Lichtleitfaserbündel wird dabei die Ausdehnung der Lichtleitfaserbündel in lateraler Richtung verstanden.

Gemäß einer weiteren Ausführungsform weisen das erste und das zweite Lichtleitfaserbündel im ersten Bereich einen Abstand von mindestens 3 mm zueinander auf. Dadurch kann vorteilhafterweise erreicht werden, dass Licht aus einer ersten Lichtquelle nur in die Einzelfasern des ersten Lichtleitfaserbündels einkoppelt und Licht aus einer zweiten Lichtquelle nur in die Einzelfasern des zweiten Lichtleitfaserbündels einkoppelt, beispielsweise bei Lichtquellen, die Licht unterschiedlicher Wellenlänge abstrahlen. Gemäß einer bevorzugten Ausführungsform weisen die Lichtleitfaserbündel im ersten Bereich einen Abstand von mindestens 5 mm, besonders bevorzugt von mindestens 10 mm zueinander auf.

Der Spritzgussträger kann beispielsweise eine Länge zwischen 5 cm und 100 cm und eine Breite zwischen 1 cm und 20 cm aufweisen. Bevorzugt weist der Spritzgussträger eine Länge zwischen 5 cm und 20 cm und eine Breite zwischen 1 cm und 10 cm auf.

Gemäß der Erfindung weist der Spritzgussträger eine Befestigungsrippe zum Befestigen an einem Trägerbauteil auf. Die Befestigungsrippe kann beispielsweise vom Spritzgussträger abstehen und Befestigungsmittel aufweisen, mittels derer die Lichtleiterträgervorrichtung an einem Trägerbauteil befestigt werden kann. Die Befestigungsrippe bildet einen Teil des Spritzgussträgers und ist einteilig mit dem Spritzgussträger ausgebildet. Besonders bevorzugt weist der Spritzgussträger zumindest zwei derartige Befestigungsrippen zum Befestigen an einem Trägerbauteil auf. Bei dem Trägerbauteil kann es sich beispielsweise um eine Platine bzw. Leiterplatte mit darauf angeordneten Leuchtdioden handeln. Der Spritzgussträger kann auch mit dem Trägerbauteil mittels einer Verklipsung verbunden sein. Dadurch wird vorteilhafterweise eine prozesssichere Verbindung der Einzelfasern mit der bzw. den Lichtquellen erreicht.

Gemäß einer weiteren Ausführungsform weist die Lichtleiterträgervorrichtung zumindest zehn Lichtleitfaserbündel auf, welche jeweils voneinander beabstandet im Spritzgussträger eingebettet sind. Vorzugsweise sind dabei alle Lichtleitfaserbündel im Spritzgussträger gemeinsam umspritzt. Vorzugsweise ist der Abstand zwischen zwei direkt zueinander benachbarten Lichtleitfaserbündeln größer als eine jeweilige Breite der Lichtleitfaserbündel, d.h. der Abstand ist jeweils größer als die Ausdehnung der einzelnen Lichtleitfaserbündel in lateraler Richtung. Beispielsweise können die Lichtleitfaserbündel zueinander jeweils einen Abstand von mindestens 3 mm, bevorzugt von mindestens 5 mm, aufweisen.

Mittels einer hier beschriebenen Lichtleiterträgervorrichtung kann vorteilhafterweise eine Montage von einer Vielzahl von Einzelfasern aufweisenden Lichtleitfaserbündeln an einer Vielzahl von Lichtquellen erleichtert werden.

Weiterhin wird ein Beleuchtungssystem angegeben, das eine Lichtleiterträgervorrichtung und zumindest eine erste und eine zweite Lichtquelle umfasst. Die vorher und im Folgenden beschriebenen Ausführungsformen in Bezug auf die Lichtleiterträgervorrichtung gelten gleichermaßen für die im Beleuchtungssystem enthaltene Lichtleiterträgervorrichtung.

Vorzugsweise sind die erste und die zweite Lichtquelle derart zur Lichtleiterträgervorrichtung angeordnet, dass von der ersten Lichtquelle abgestrahltes Licht in die Einzelfasern des ersten Lichtleitfaserbündels eingekoppelt und von der zweiten Lichtquelle abgestrahltes Licht in die Einzelfasern des zweiten Lichtleitfaserbündels eingekoppelt wird.

Gemäß einer weiteren Ausführungsform sind die erste und die zweite Lichtquelle voneinander beabstandet auf einem gemeinsamen Trägerbauteil angeordnet. Beispielsweise können die Lichtquellen einen Abstand zueinander aufweisen, der in etwa dem Abstand der Lichtleitfaserbündel zueinander entspricht. Das Trägerbauteil kann zum Beispiel eine Platine oder Leiterplatte sein. Vorzugsweise weist das Trägerbauteil einen Abstand zur Lichtleiterträgervorrichtung von kleiner oder gleich 0,5 mm auf. Dadurch kann erreicht werden, dass Licht, das von den auf dem Trägerbauteil angeordneten Lichtquellen abgestrahlt wird, optimal in die Einzelfaser der Lichtleitfaserbündel eingekoppelt werden kann. Gemäß einer bevorzugten Ausführungsform handelt es sich bei der ersten und der zweiten Lichtquelle um Leuchtdioden, wie z.B. sogenannte LEDs oder OLEDs.

Weiterhin wird ein Verfahren zur Herstellung einer Lichtleiterträgervorrichtung angegeben. Die dadurch herstellbare oder hergestellte Lichtleiterträgervorrichtung kann eines oder mehrere Merkmale der vorgenannten Ausführungsformen aufweisen. Die vorher und im Folgenden beschriebenen Ausführungsformen gelten gleichermaßen für die Lichtleiterträgervorrichtung wie auch für das Verfahren zur Herstellung der Lichtleiterträgervorrichtung.

Gemäß der Erfindung werden zur Herstellung einer Lichtleiterträgervorrichtung zumindest ein erstes und ein zweites Lichtleitfaserbündel, welche jeweils eine Vielzahl an Einzelfasern umfassen, bereitgestellt. Weiterhin werden das erste und das zweite Lichtleitfaserbündel in einem zueinander vorgegebenen Abstand fixiert. Anschließend werden das erste und das zweite Lichtleitfaserbündel in einem ersten Bereich mittels eines Spritzgussvorgangs umspritzt. Dabei wird ein Spritzgussträger, in dem das erste und das zweite Lichtleitfaserbündel eingebettet sind, ausgeformt. Beispielsweise werden zumindest zehn Lichtleitfaserbündels mittels des Spritzgussvorgangs gemeinsam umspritzt.

Gemäß einer weiteren Ausführungsform werden nach dem Ausformen des Spritzgussträgers über den ersten Bereich überstehende Einzelfasern der Lichtleitfaserbündel bündig mit dem Spritzgussträger abgeschnitten. Alternativ können die Einzelfasern auch abgeschliffen werden. Durch das Abschneiden bzw. Abschleifen der Einzelfasern kann vorteilhafterweise eine hohe optische Effizienz der Lichtleitfaserbündel erzielt werden. Weiterhin ist es auch möglich, beim Abschneiden bzw. Abschleifen der Einzelfasern einen Teil des Spritzgussträgers ebenfalls mit abzutrennen. Dadurch kann sichergestellt werden, dass keine der Einzelfasern zu wenig abgeschnitten wird.

Gemäß einer alternativen Ausführungsform werden die Einzelfasern der Lichtleitfaserbündels vor dem Fixieren einheitlich zueinander ausgerichtet werden. Beispielsweise können die Einzelfasern eines jeden Lichtleitfaserbündels zumindest im ersten Bereich parallel zueinander ausgerichtet werden.

Gemäß einer alternativen Ausführungsform werden die Einzelfasern der Lichtleitfaserbündel bereits vor dem Umspritzen bündig abgeschnitten und anschließend umspritzt. Dies kann sich insbesondere bei einem Einsatz von transparentem Kunststoffmaterial eignen.

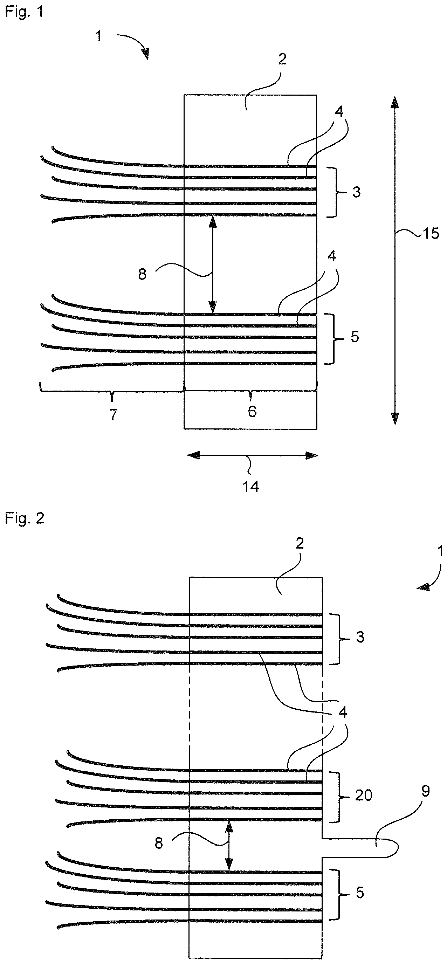

Weitere Vorteile und vorteilhafte Ausführungsformen der hier beschriebenen Lichtleiterträgervorrichtung, des Beleuchtungssystems und des Verfahrens zur Herstellung der Lichtleiterträgervorrichtung ergeben sich aus dem im Folgenden in Verbindung mit den Figuren 1 bis 5 beschriebenen Ausführungsformen. Es zeigen:
- Fig. 1: eine schematische Darstellung einer Lichtleiterträgervorrichtung gemäß einem Ausführungsbeispiel,
- Fig. 2: eine schematische Darstellung einer Lichtleiterträgervorrichtung mit einer Vielzahl von Lichtleitfaserbündeln gemäß einem weiteren Ausführungsbeispiel,
- Fig. 3: eine schematische Darstellung eines Beleuchtungssystems gemäß einem Ausführungsbeispiel,
- Fig. 4: eine schematische Darstellung eines Beleuchtungssystems gemäß einem weiteren Ausführungsbeispiel, und
- Fig. 5: eine schematische Darstellung eines Verfahrens zur Herstellung einer Lichtleiterträgervorrichtung gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

Figur 1 zeigt eine schematische Ansicht einer Lichtleiterträgervorrichtung 1 gemäß einem ersten Ausführungsbeispiel. Die Lichtleiterträgervorrichtung 1 umfasst einen Spritzgussträger 2, in dem ein erstes Lichtleitfaserbündel 3 und ein zweites Lichtleitfaserbündel 5 eingebettet sind. Der Spritzgussträger 2 kann aus einem transparenten oder nichttransparenten Kunststoff gebildet sein. Das erste und das zweite Lichtleitfaserbündel umfassen jeweils eine Vielzahl an Einzelfasern 4, die beispielsweise Glasfasern oder optische Polymerfasern sein können. Das erste Lichtleitfaserbündel 3 ist vom zweiten Lichtleitfaserbündel 5 beabstandet im Spritzgussträger 2 eingebettet. Dabei weist das erste Lichtleitfaserbündel 3 einen Abstand zum zweiten Lichtleitfaserbündel 5 von zumindest 3 mm auf. Alternativ kann das erste Lichtleitfaserbündel 3 einen Abstand von mindestens 5 mm, oder bevorzugt von mindestens 10 mm zum zweiten Lichtleitfaserbündel 5 aufweisen. Das erste und das zweite Lichtleitfaserbündel 3, 5 sind mittels eines Spritzgussverfahrens im Spritzgussträger 2 eingegossen.

Weiterhin weisen das erste und das zweite Lichtleitfaserbündel 3, 5 jeweils einen ersten Bereich 6 auf, in welchem die Lichtleitfaserbündel 3, 5 in lateraler Richtung, d.h. in einer zur Haupterstreckungssrichtung der Einzelfasern 4 senkrechten Richtung vollständig vom Spritzgussträger 2 umschlossen sind. Darüber hinaus weisen das erste und das zweite Lichtleitfaserbündel 3, 5 jeweils einen zweiten Bereich 7 auf, der nicht vom Spritzgussträger 2 umschlossen ist. Im zweiten Bereich 7, der sich direkt an den ersten Bereich 6 anschließt, können die Einzelfasern 4 des ersten Lichtleitfaserbündels 3 einen geringeren Abstand zu Einzelfasern 4 des zweiten Lichtleitfaserbündels 5 aufweisen.

Figur 2 zeigt ein weiteres Ausführungsbeispiel einer Lichtleiterträgervorrichtung 1. Die Lichtleiterträgervorrichtung 1 weist wiederum einen Spritzgussträger 2 auf. Im Spritzgussträger 2 ist eine Vielzahl an Lichtleitfaserbündeln 3, 5, 20 eingebettet, welche voneinander beabstandet im Spritzgussträger 2 angeordnet sind, wobei in Figur 2 lediglich drei der Lichtleitfaserbündeln 3, 5, 20 dargestellt sind. Vorzugsweise weist die Lichtleiterträgervorrichtung 1 zumindest zehn Lichtleitfaserbündeln 3, 5, 20, die jeweils voneinander beabstandet im Spritzgussträger 2 eingebettet sind, auf. Die einzelnen Lichtleitfaserbündel 3, 5, 20 weisen einen Abstand von mindestens 3 mm zueinander auf. Alternativ können die einzelnen Lichtleitfaserbündel jeweils einen Abstand von mindestens 5 mm bzw. von mindestens 10 mm voneinander aufweisen. Der Spritzgussträger 2 ist als Spritzgussteil in einem Spritzgussverfahren hergestellt und weist ein Befestigungselement 9, welches als Befestigungsrippe ausgebildet ist und zum Befestigen an einem Trägerbauteil ausgebildet ist, auf. Das Befestigungselement 9 ist ein Teil des Spritzgussträgers 2 und im selben Verfahrensschritt des Ausbildens des Spritzgussträgers 2 mittels des Spritzgussverfahrens hergestellt.

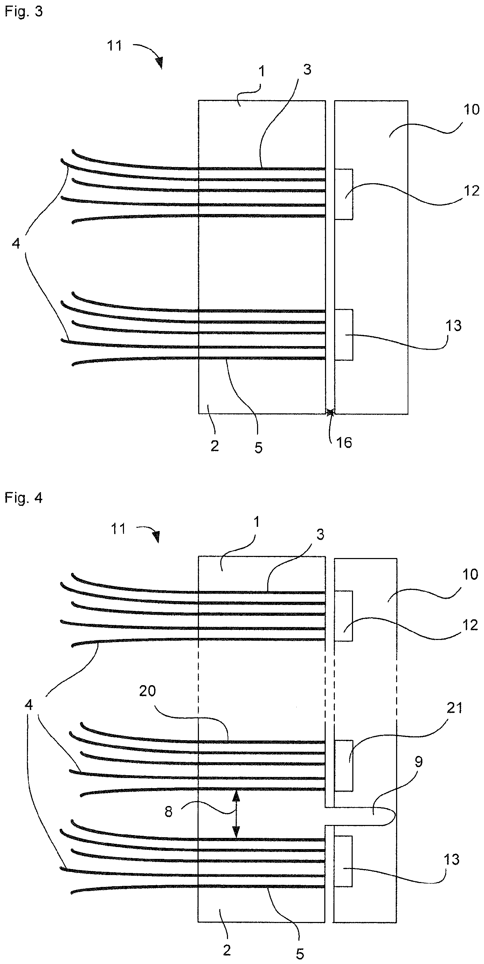

Figur 3 zeigt ein Beleuchtungssystem 11, das eine Lichtleiterträgervorrichtung 1, wie sie im Zusammenhang mit Figur 1 beschrieben ist, sowie ein Trägerbauteil 10 aufweist. Das Trägerbauteil 10 umfasst eine erste Lichtquelle 12 und eine zweite Lichtquelle 13, wobei die erste Lichtquelle 12 dem ersten Lichtleitfaserbündel 3 und die zweite Lichtquelle 13 dem zweiten Lichtleitfaserbündel 5 zugeordnet ist. Die Lichtquellen 12, 13 sind als Leuchtdioden ausgeführt. Das Trägerbauteil 10 weist zur Lichtleiterträgervorrichtung 1 einen Abstand von maximal 0,5 mm auf, so dass von den Lichtquellen 12, 13 abgestrahltes Licht optimal in die Einzelfasern 4 der Lichtleitfaserbündel 3, 5 eingekoppelt werden kann.

In Figur 4 ist ein weiteres Ausführungsbeispiel eines Beleuchtungssystems 11 dargestellt, wobei das Beleuchtungssystem 11 eine Lichtleiterträgervorrichtung 1, die eine Vielzahl von Lichtleitfaserbündeln 3, 5, 20 umfasst, und ein Trägerbauteil 10, das eine Vielzahl von Lichtquellen 12, 13, 21 aufweist, umfasst, wobei in Figur 4 lediglich drei der Lichtleitfaserbündel 3, 5, 20 und drei der Lichtquellen 12, 13, 21 dargestellt sind. Vorzugweise entspricht die Anzahl an Lichtleitfaserbündel der Anzahl an Lichtquellen. Insbesondere ist jedem Lichtleitfaserbündel 3, 5, 20 genau eine Lichtquelle 12, 13, 21 zugeordnet. Beispielsweise weist die Lichtleiterträgervorrichtung 1 eine Länge von einem Meter und auf und das Beleuchtungssystem 11 umfasst fünfzig Lichtleitfaserbündel sowie fünfzig Lichtquellen, die jeweils voneinander beabstandet angeordnet sind. Die Lichtleiterträgervorrichtung 1 ist mittels einer Befestigungsrippe 9 fest mit dem Trägerbauteil 10 verbunden. Vorzugsweise weist das Beleuchtungssystem 11 eine Vielzahl von derartigen Befestigungsrippen auf.

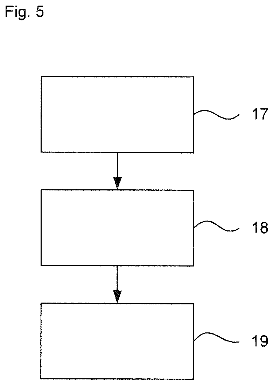

Fig. 5 zeigt eine schematische Darstellung eines Verfahrens zur Herstellung einer Lichtleiterträgervorrichtung 1. Das Verfahren umfasst zumindest die im Folgenden erläuterten Schritte 17, 18, 19. Im ersten Verfahrensschritt 17 werden ein erstes und ein zweites Lichtleitfaserbündel 3, 5, welche jeweils eine Vielzahl von Einzelfasern 4 umfasst, bereitgestellt. Anschließend werden im Verfahrensschritt 18 das erste und das zweite Lichtleitfaserbündel 3, 5 in einem vorgegebenen Abstand zueinander fixiert. Im nachfolgenden Verfahrensschritt 19 werden die Lichtleitfaserbündel 3, 5 in einem ersten Bereich 6 mittels eines Spritzgussvorgangs umspritzt. Dabei wird ein Spritzgussträger 2 ausgebildet.

In einem dem Verfahrensschritt 19 nachfolgenden Verfahrensschritt können über dem ersten Bereich 6 überstehende Bereiche der Einzelfasern 4 bündig mit dem Spritzgussträger abgeschnitten oder abgeschliffen werden.

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Lichtleiterträgervorrichtung
- 2: Spritzgussträger
- 3: erstes Lichtleitfaserbündel
- 4: Einzelfaser
- 5: zweites Lichtleitfaserbündel
- 6: erster Bereich
- 7: zweiter Bereich
- 8: Abstand
- 9: Befestigungsrippe
- 10: Trägerbauteil
- 11: Beleuchtungssystem
- 12: erste Lichtquelle
- 13: zweite Lichtquelle
- 14: Breite
- 15: Länge
- 16: Abstand
- 17, 18, 19 ù: Verfahrensschritt
- 20: weiteres Lichtleitfaserbündel
- 21: weitere Lichtquelle

## Patentansprüche

1. Lichtleiterträgervorrichtung (1), umfassend
- einen Spritzgussträger (2), der einen Kunststoff aufweist,
- ein erstes Lichtleitfaserbündel (3), das eine Vielzahl an Einzelfasern (4) umfasst, und
- ein zweites Lichtleitfaserbündel (5), das eine Vielzahl an Einzelfasern (4) umfasst,
- wobei das erste und das zweite Lichtleitfaserbündel (3, 5) voneinander beabstandet im Spritzgussträger (2) eingebettet sind, und
- wobei der Spritzgussträger (2) eine Befestigungsrippe (9) zum Befestigen an einem Trägerbauteil (10) aufweist, wobei die Befestigungsrippe (9) einteilig mit dem Spritzgussträger (2) ausgebildet ist.

2. Lichtleiterträgervorrichtung nach Anspruch 1, wobei das erste und das zweite Lichtleitfaserbündel (3, 5) mittels Spritzgießen im Spritzgussträger (2) eingegossen sind.

3. Lichtleiterträgervorrichtung nach einem der Ansprüche 1 oder 2, wobei das erste und das zweite Lichtleitfaserbündel (3, 5) jeweils einen ersten Bereich (6) aufweisen, in dem die Lichtleitfaserbündel (3, 5) in einer lateralen Richtung vollständig vom Spritzgussträger (2) umschlossen sind.

4. Lichtleiterträgervorrichtung nach Anspruch 3, wobei das erste und das zweite Lichtleitfaserbündel (3, 5) jeweils einen zweiten Bereich (7) außerhalb des Spritzgussträgers (2) aufweisen.

5. Lichtleiterträgervorrichtung nach einem der Ansprüche 3 oder 4, wobei das erste und das zweite Lichtleitfaserbündel (3, 5) im ersten Bereich (6) einen Abstand (8) von mindestens 3 mm zueinander aufweisen.

6. Lichtleiterträgervorrichtung nach einem der vorhergehenden Ansprüche, aufweisend zumindest zehn Lichtleitfaserbündel (3, 5, 20), welche jeweils voneinander beabstandet im Spritzgussträger (2) eingebettet sind.

7. Beleuchtungssystem (11), aufweisend
- eine Lichtleiterträgervorrichtung (1) gemäß einem der Ansprüche 1 bis 6, und
- eine erste und eine zweite Lichtquelle (12, 13),
- wobei die erste und die zweite Lichtquelle (12, 13) derart zur Lichtleiterträgervorrichtung (1) angeordnet sind, dass von der ersten Lichtquelle (12) abgestrahltes Licht in die Einzelfasern (4) des ersten Lichtleitfaserbündels (3) eingekoppelt und von der zweiten Lichtquelle (13) abgestrahltes Licht in die Einzelfasern (4) des zweiten Lichtleitfaserbündels (5) eingekoppelt wird.

8. Beleuchtungssystem nach Anspruch 7, wobei die erste und die zweite Lichtquelle (12, 13) voneinander beabstandet auf einem gemeinsamen Trägerbauteil (10) angeordnet sind, und wobei die Lichtleitfaserbündel (3, 5) einen ersten Bereich (6) aufweisen, in dem die Einzelfasern (4) der Lichtleitfaserbündel (3, 5) im Spritzgussträger (2) eingebettet sind, und einen zweiten Bereich (7), in dem die Einzelfasern (4) der Lichtleitfaserbündel (3, 5) aus dem Spritzgussträger (2) herausragen, und wobei der erste Bereich (6) dem Trägerbauteil (10) zugewandt angeordnet ist und der zweite Bereich (7) dem Trägerbauteil (10) abgewandt angeordnet ist.

9. Beleuchtungssystem nach einem der Ansprüche 7 oder 8, wobei die erste und die zweite Lichtquelle (12, 13) Leuchtdioden sind.

10. Verfahren zur Herstellung einer Lichtleiterträgervorrichtung (1), umfassend die folgenden Schritte:
- Bereitstellen eines ersten und eines zweiten, jeweils eine Vielzahl an Einzelfasern (4) umfassenden Lichtleitfaserbündels (3, 5),
- Fixieren des ersten und zweiten Lichtleitfaserbündels (3, 5) in einem zueinander vorgegebenen Abstand (8),
- Umspritzen der Lichtleitfaserbündel (3, 5) in einem ersten Bereich (6) mittels eines Spritzgussvorgangs unter Ausbildung eines Spritzgussträgers (2), wobei während des Ausbildens des Spritzgussträgers (2) eine Befestigungsrippe (9) zum Befestigen an einem Trägerbauteil (10) hergestellt wird.

11. Verfahren zur Herstellung einer Lichtleiterträgervorrichtung nach Anspruch 10, wobei die Einzelfasern (4) des ersten und zweiten Lichtleitfaserbündels (3, 5) vor dem Fixieren einheitlich zueinander ausgerichtet werden.

12. Verfahren zur Herstellung einer Lichtleiterträgervorrichtung nach einem der Ansprüche 10 oder 11, wobei nach dem Umspritzen auf einer Seite des Spritzgussträgers (2) über den ersten Bereich (6) überstehende Einzelfasern (4) bündig mit dem Spritzgussträger (2) abgeschnitten werden.

13. Verfahren zur Herstellung einer Lichtleiterträgervorrichtung nach einem der Ansprüche 10 bis 12, wobei zumindest zehn Lichtleitfaserbündel (3, 5, 20) mittels eines Spritzgussvorgangs gemeinsam umspritzt werden.

## Claims

1. Light-guide carrier apparatus (1), comprising
- an injection moulding carrier (2) having a plastic,
- a first light-guiding fibre bundle (3) comprising a multiplicity of individual fibres (4), and
- a second light-guiding fibre bundle (5) comprising a multiplicity of individual fibres (4),
- wherein the first and the second light-guiding fibre bundle (3, 5) are embedded in the injection moulding carrier (2) such that they are spaced apart from one another, and
- wherein the injection moulding carrier (2) has an attachment rib (9) for attachment to a carrier component (10), wherein the attachment rib (9) is formed in one piece with the injection moulding carrier (2).

2. Light-guide carrier apparatus according to Claim 1, wherein the first and the second light-guiding fibre bundle (3, 5) have been moulded in the injection moulding carrier (2) by way of injection moulding.

3. Light-guide carrier apparatus according to either of Claims 1 and 2, wherein the first and the second light-guiding fibre bundle (3, 5) each have a first region (6) in which the light-guiding fibre bundles (3, 5) are entirely enclosed by the injection moulding carrier (2) in a lateral direction.

4. Light-guide carrier apparatus according to Claim 3, wherein the first and the second light-guiding fibre bundle (3, 5) each have a second region (7) outside the injection moulding carrier (2).

5. Light-guide carrier apparatus according to either of Claims 3 and 4, wherein the first and the second light-guiding fibre bundle (3, 5) have a distance (8) from one another of at least 3 mm in the first region (6).

6. Light-guide carrier apparatus according to one of the preceding claims, having at least ten light-guiding fibre bundles (3, 5, 20) embedded in the injection moulding carrier (2) such that they are spaced apart from one another.

7. Illumination system (11), having
- a light-guide carrier apparatus (1) according to one of Claims 1 to 6, and
- a first and a second light source (12, 13),
- wherein the first and the second light source (12, 13) are arranged relative to the light-guide carrier apparatus (1) in such a way that light emitted by the first light source (12) is coupled into the individual fibres (4) of the first light-guiding fibre bundle (3) and light emitted by the second light source (13) is coupled into the individual fibres (4) of the second light-guiding fibre bundle (5).

8. Illumination system according to Claim 7, wherein the first and the second light source (12, 13) are arranged on a common carrier component (10) such that they are spaced apart from one another, and wherein the light-guiding fibre bundles (3, 5) have a first region (6) in which the individual fibres (4) of the light-guiding fibre bundles (3, 5) are embedded in the injection moulding carrier (2) and a second region (7) in which the individual fibres (4) of the light-guiding fibre bundles (3, 5) project out of the injection moulding carrier (2), and wherein the first region (6) is arranged such that it faces the carrier component (10) and the second region (7) is arranged such that it faces away from the carrier component (10).

9. Illumination system according to either of Claims 7 and 8, wherein the first and the second light source (12, 13) are light-emitting diodes.

10. Method for producing a light-guide carrier apparatus (1), comprising the following steps:
- providing a first and a second light-guiding fibre bundle (3, 5) comprising a multiplicity of individual fibres (4) each,
- fixing the first and second light-guiding fibre bundles (3, 5) at a specified distance (8) from one another,
- overmoulding the light-guiding fibre bundles (3, 5) in a first region (6) using an injection moulding process to form an injection moulding carrier (2), wherein an attachment rib (9) for attachment to a carrier component (10) is produced during the forming of the injection moulding carrier (2).

11. Method for producing a light-guide carrier apparatus according to Claim 10, wherein the individual fibres (4) of the first and second light-guiding fibre bundles (3, 5) are uniformly aligned with one another before being fixed.

12. Method for producing a light-guide carrier apparatus according to either of Claims 10 and 11, wherein individual fibres (4) that project beyond the first region (6) on a side of the injection moulding carrier (2) after the overmoulding are cut off flush with the injection moulding carrier (2).

13. Method for producing a light-guide carrier apparatus according to one of Claims 10 to 12, wherein at least ten light-guiding fibre bundles (3, 5, 20) are overmoulded together by way of an injection moulding process.

## Revendications

1. Dispositif porteur de guide de lumière (1), comprenant
- un élément porteur moulé par injection (2), qui possède une matière plastique,
- un premier faisceau de fibres optiques (3), qui comprend une pluralité de fibres individuelles (4), et
- un deuxième faisceau de fibres optiques (5), qui comprend une pluralité de fibres individuelles (4),
- le premier et le deuxième faisceau de fibres optiques (3, 5) étant enrobés dans l'élément porteur moulé par injection (2) en étant séparés l'un de l'autre, et
- l'élément porteur moulé par injection (2) possédant une nervure de fixation (9) servant à la fixation à un composant d'élément porteur (10), la nervure de fixation (9) étant réalisée d'un seul tenant avec l'élément porteur moulé par injection (2).

2. Dispositif porteur de guide de lumière selon la revendication 1, le premier et le deuxième faisceau de fibres optiques (3, 5) étant coulés par moulage par injection dans l'élément porteur moulé par injection (2) .

3. Dispositif porteur de guide de lumière selon l'une des revendications 1 ou 2, le premier et le deuxième faisceau de fibres optiques (3, 5) possédant respectivement une première zone (6) dans laquelle les faisceaux de fibres optiques (3, 5) sont entièrement entourés par l'élément porteur moulé par injection (2) dans une direction latérale.

4. Dispositif porteur de guide de lumière selon la revendication 3, le premier et le deuxième faisceau de fibres optiques (3, 5) possédant respectivement une deuxième zone (7) à l'extérieur de l'élément porteur moulé par injection (2).

5. Dispositif porteur de guide de lumière selon l'une des revendications 3 ou 4, le premier et le deuxième faisceau de fibres optiques (3, 5) présentant un écart (8) d'au moins 3 mm entre eux dans la première zone (6).

6. Dispositif porteur de guide de lumière selon l'une des revendications précédentes, possédant au moins dix faisceaux de fibres optiques (3, 5, 20) qui sont enrobés dans l'élément porteur moulé par injection (2) en étant respectivement espacés les uns des autres.

7. Système d'éclairage (11), comprenant
- un dispositif porteur de guide de lumière (1) selon l'une des revendications 1 à 6 et
- une première et une deuxième source de lumière (12, 13),
- la première et la deuxième source de lumière (12, 13) étant disposées par rapport au dispositif porteur de guide de lumière (1) de telle sorte que la lumière rayonnée par la première source de lumière (12) est injectée dans les fibres individuelles (4) du premier faisceau de fibres optiques (3) et la lumière rayonnée par la deuxième source de lumière (13) est injectée dans les fibres individuelles (4) du deuxième faisceau de fibres optiques (5).

8. Système d'éclairage selon la revendication 7, la première et la deuxième source de lumière (12, 13) étant disposées espacées l'une de l'autre sur un composant d'élément porteur (10) commun, et les faisceaux de fibres optiques (3, 5) possédant une première zone (6) dans laquelle les fibres individuelles (4) des faisceaux de fibres optiques (3, 5) sont enrobées dans l'élément porteur moulé par injection (2) et une deuxième zone (7) dans laquelle les fibres individuelles (4) des faisceaux de fibres optiques (3, 5) font saillie hors de l'élément porteur moulé par injection (2), et la première zone (6) étant disposée en faisant face au composant d'élément porteur (10) et la deuxième zone (7) étant disposée à l'opposé du composant d'élément porteur (10).

9. Système d'éclairage selon l'une des revendications 7 ou 8, les première et deuxième sources de lumière (12, 13) étant des diodes électroluminescentes.

10. Procédé de fabrication d'un dispositif porteur de guide de lumière (1), comprenant les étapes suivantes :
- fourniture d'un premier et d'un deuxième faisceau de fibres optiques (3, 5) comportant respectivement une pluralité de fibres individuelles (4),
- calage du premier et du deuxième faisceau de fibres optiques (3, 5) à un écart (8) prédéfini l'un par rapport à l'autre,
- surmoulage des faisceaux de fibres optiques (3, 5) dans une première zone (6) au moyen d'une opération de moulage par injection en formant un élément porteur moulé par injection (2), une nervure de fixation (9) servant à la fixation à un composant d'élément porteur (10) étant produite pendant la formation de l'élément porteur moulé par injection (2).

11. Procédé de fabrication d'un dispositif porteur de guide de lumière selon la revendication 10, les fibres individuelles (4) du premier et du deuxième faisceau de fibres optiques (3, 5) étant orientées uniformément les unes par rapport aux autres avant le calage.

12. Procédé de fabrication d'un dispositif porteur de guide de lumière selon l'une des revendications 10 ou 11, après le surmoulage sur un côté de l'élément porteur moulé par injection (2), les fibres individuelles (4) qui dépassent de la première zone (6) étant coupées à fleur de l'élément porteur moulé par injection (2).

13. Procédé de fabrication d'un dispositif porteur de guide de lumière selon l'une des revendications 10 à 12, au moins dix faisceaux de fibres optiques (3, 5, 20) étant surmoulés en commun au moyen d'une opération de moulage par injection.
